# EUROPEAN PATENT SPECIFICATION

(11) **EP 2 620 349 B1**
(45) Date of publication and mention of the grant of the patent: **15.07.2015**
(21) Application number: 13152218.7
(22) Date of filing: 22.01.2013
(51) Int. Cl.: B62B 13/16, B62B 17/06, B62B 13/06

(54) **Sledge for one person**
Schlitten für eine Person
Luge pour une personne

(30) Priority: 24.01.2012 NL 1039319
(43) Date of publication of application: 31.07.2013
(73) Proprietor: Wintersport Leerdam B.V., 4143 HL Leerdam (NL)
(72) Inventor: De Haas, Fortunatus Johannes, 4153 AW Beesd (NL)
(74) Representative: Altenburg, Bernardus Stephanus Franciscus

(56) References cited:
- DE-U1- 9 419 213
- DE-U1-202008 000 489
- FR-A1- 2 909 630
- US-A- 1 706 568
- US-A- 5 687 977
- US-A- 6 139 031

## Description

The present invention relates to a sledge for 1 person which sledge comprises a body with
- a front side and a back side,
- a left longitudinal side and a right longitudinal side;
- an underside which acts as a sliding surface during use, and
- a topside facing away from the underside which topside has a seat section at the back side; and
the sledge comprises a handle to which the person can hold on during use of the sledge, which handle during use is situated halfway both longitudinal sides and between the front side and the seat section wherein the sledge at the front side has a left front section and a right front section with thereinbetween a mouth opening, the handle has a proximal end and a distal end, and the sledge can be in a compact first state and in a second state for use, wherein the handle at the proximal end thereof is rotatable about an axis of rotation between the left front section and the right front section and tranverse to the longitudinal direction of the sledge for rotating the handle from the compact first state toward the second state for use and vice versa.

A sledge for 1 person is known from US3522952. The handle extends away from the topside, in the direction of the front side. The handle of the sledge from US3522952 is a fixed handle. As a result such a sledge is very bulky, which is undesirable for storage and/or transport. A sledge having a handle that can be disassembled is commercially available. Such a sledge takes up less volume during (bulk)transport, which results in a cost advantage for the manufacturer. Furthermore, a consumer can store the sledge in a disassembled state, thus requiring less storage space.

A disadvantage of the last-named sledge is that assembling the handle is quite a job.

DE9419213.8 discloses a sledge according to the preamble.

The present invention aims to provide a sledge that can be assembled and disassembled more easily so that the sledge in a disassembled state has relatively little bulk for transportation and/or storage.

To this end, the sledge according to the preamble is characterized in that the handle at a distance of the distal end and outside the axis of rotation is provided with a mounting section which in the second state for use is connected with the body by means of a connecting organ; and wherein the distal end of the handle in the compact first state is received in a recess that extends in the longitudinal direction of the sledge.

Because the axis of rotation already provides an attachment point for the handle, a second point can easily be provided using the connecting organ for fixing the handle in the second state for use. As a result less effort is required for changing the state. Furthermore, in the first state the sledge is compact, which both for the manufacturer and the retailer as well as for the consumer offers advantages during shipment, storage and transport. The connecting organ can for instance be a screw.

US1706568A discloses a sledge comprising a single elongated flat flexible toboggan member having an upturned front end provided with a central longitudinal slot, a pin extending across said slot, a grip pivotally supported on said pin.

DE202008000489U1 discloses a sledge comprising a steering stick that is rigidly connected to a base plate that is screwed to the sliding plane.

FR2909630A1 discloses a sledge comprising a hinged stick that can be in a first state for use and in a second state for storage.

According to a favourable embodiment, the recess extending in the longitudinal direction of the sledge is situated at the underside of the sledge forming two sliding body parts.

Thus a sledge is provided with both a good directional behaviour, while the intermediate space, i.e. the recess extending in the longitudinal direction of the sledge, in the compact first state is used for receiving the distal end of the handle.

According to a favourable embodiment, the sledge comprises an upper shell part and a lower shell part, wherein the sledge on the interface between said shell parts in the front sections has recesses for receiving cams of the handle, and the shell parts have mounting sections between the mouth opening and the seat section and the mounting section of the handle in the second state for use is supported against the mounting section of the upper shell part.

Thus it is achieved that a (lever)force exerted by a user by pulling the handle backwards at the location of the mounting section of the upper shell part will not result in a separation of the shell parts by lever action between the proximal end of the handle and the location where the mounting section is supported against the upper shell part. Therewith it is made possible to produce the sledge in a cheaper way by forming the body out of two shell parts instead of forming a (hollow) body of 1 shell part. The shell parts may be connected quickly and without tools by means of snap connections.

According to a preferred embodiment, the handle at the proximal end thereof has two legs and between the left front section and the right front section a handgrip is situated to which both legs are connected.

Thus a handle is provided that is available for a user for easily transporting the sledge in the compact first state. The handle does not hinder when bringing the sledge in the compact first state. It is possible that the handle is situated at the axis of rotation, in which case the handle and the axis of rotation coincide and any form of hindrance when shifting between the states is excluded.

According to an especially preferred embodiment, the handgrip forms an axle which extends between the left front section and the right front section.

Thus, the axle fulfills two functions simultaneously and no further parts are necessary to provide a handle.

According to a favourable embodiment, the connecting organ has the shape of a locking organ that in a first position thereof releases the handle for rotation around the axis of rotation and in a second position thereof locks the handle in the second state for use.

The locking organ has for instance the shape of a turning knob or a lock pin. Thus the states can be changed without the use of a tool.

According to a favourable embodiment, the sledge has a spring for keeping the locking organ in the second position.

Thus, the second position can be considered as a position of rest for the locking organ. This increases the safety during use of the sledge.

The present invention will now be illustrated with reference to the drawing where
Fig. 1a to c show a side view, a top view and a front view of a sledge for 1 person according to the invention in a state for use;
Fig. 2 shows a cut away longitudinal sectional view through the sledge of Fig. 1a;
Fig. 3 shows a detail of the handle in cross section through line III-III in Fig. 2; and
Fig. 4 shows a cross section according to Fig. 2 of the sledge provided with a handle.

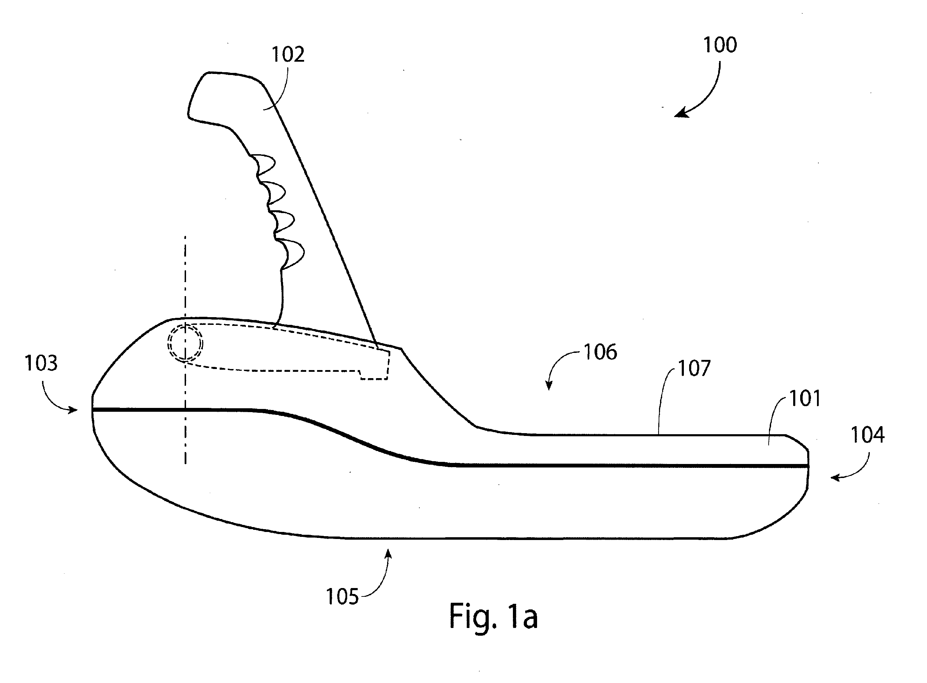

Fig. 1a shows a side view of a sledge 100 suitable for 1 person, which sledge 100 comprises a body 101 and a handle 102. The body 101 has a front side 103, a back side 104, an underside 105 which acts as a sliding surface over snow or over ice, and a topside 106. At the back side 104 of the sledge 100 there is a seat section 107.

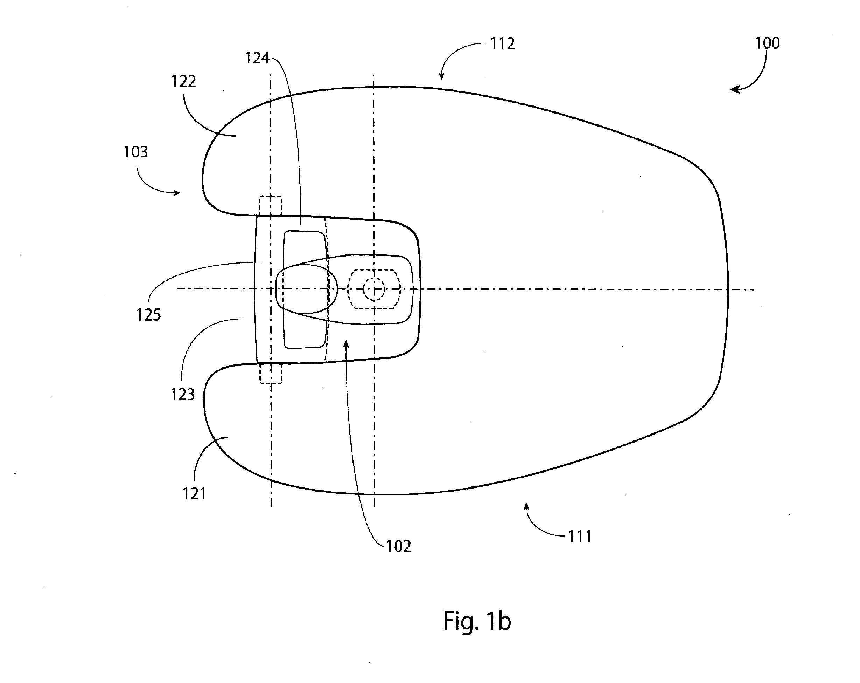

Fig. 1b shows the sledge 100 in top view with a left longitudinal side 111 and a right longitudinal side 112. At the front side 103 a left front section 121 and a right front section 122 are situated, between which a mouth opening 123 is situated.

The handle 102 serves to hold on to for the user when riding the sledge. The handle 102 has a forked proximal end with legs 124 with a handgrip 125. In the embodiment shown the handgrip 125 forms an axle, and the handle 102 can rotate about an axis of rotation which coincides with the centreline through the handgrip 125 between a state for use (second state) as shown in Fig. 1a-c and a compact first state which will be discussed later.

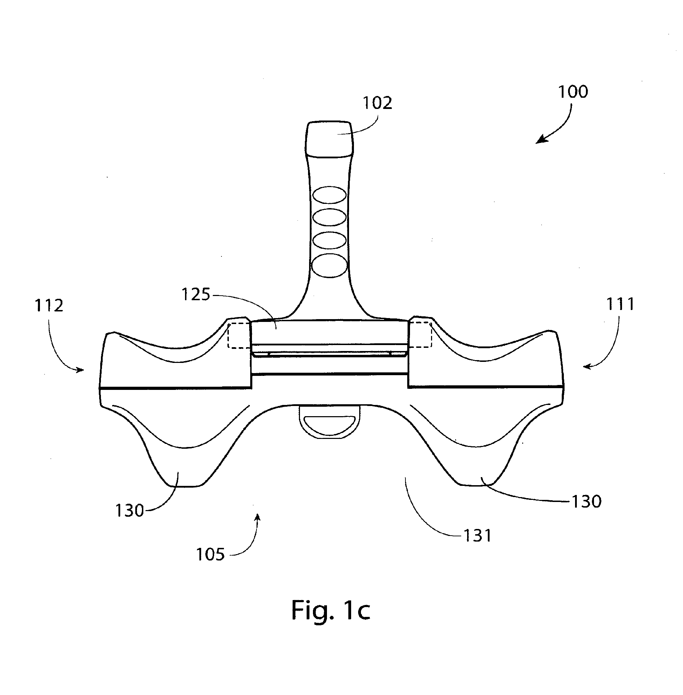

Fig. 1c shows a front view of the sledge 100, and illustrates that in the embodiment shown the sledge 100 comprises two sliding body parts 130 between which a recess 131 extending in the longitudinal direction of the sledge 100 is situated. In the compact first state of the sledge this recess 131 contains the distal end of the handle 102.

During use the user will keep his legs to the left and to the right of the handle 102, and these can rest on the body 101.

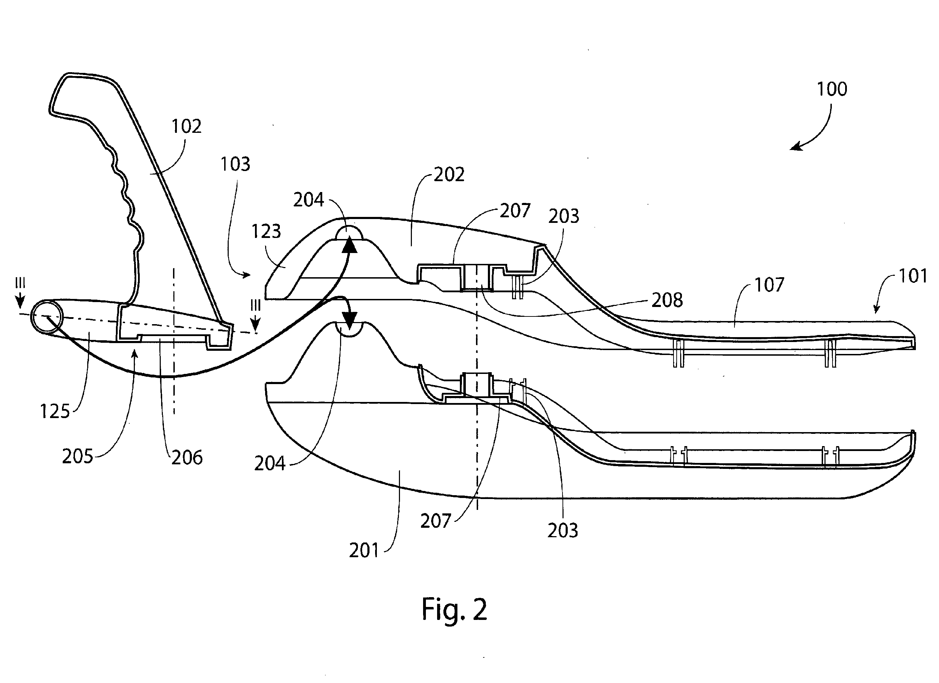

Fig. 2 shows a cut away longitudinal sectional view of the sledge 100 of Fig. 1a. It can be seen that the body 101 of the sledge 100 is composed of a lower shell part 201 and an upper shell part 202. Both shell parts are for instance manufactured of HDPE. The shell parts can be connected with each other by means of screws in screw receiving tubes 203, snap fingers, glue or the like.

Between the front side 103 and the seat section 107 the shell parts possess recesses 204 arranged for receiving protruding ends (cams) of the handgrip 125 which is situated at the distal end of the handle 102.

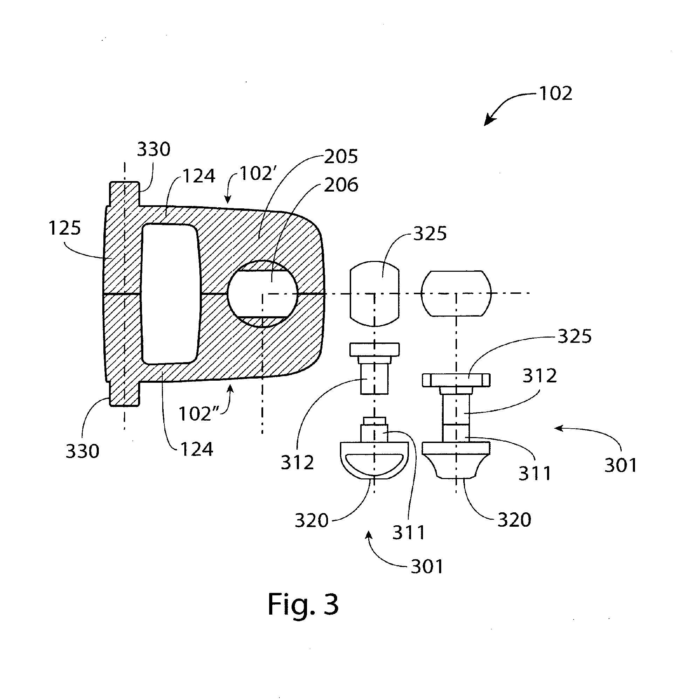

In Fig. 2 the handle 102 is shown next to the body 101 and shows that the handle 102 has a mounting section 205, which is plate-shaped and is provided with a hole 206 the function of which will be explained hereinafter when discussing Fig. 3.

Between the mouth opening 123 and the seat section 107 both shell parts possess a complementary mounting section 207 having a through opening 208.

Fig. 3 shows a detail of the handle 102, in particular a cross section along the line III-III of fig. 2, with the handgrip 125 and the mounting section 205 being provided with a hole 206 which is not-round. It can be seen that in the embodiment illustrated here the handgrip 125 has two protruding cams 330. The handle 102 is composed of two halves 102', 102". The halves are for instance made of HDPE, formed by means of injection molding and for instance connected with each other by means of snap fingers, bolts (not shown) or glues.

To the right in Fig. 3 a turning knob 301 is shown in two positions. The turning knob 301 is composed of two parts, viz. a first part 311 and a second part 312 and for instance connected to each other by means of a bolt (to the right in Fig. 3). The first part 311 has a finger grip 320. The second part 312 has a not-round head 325 which in a first position (right) can pass through the hole 206 and in a second position (left) cannot pass through the hole 206.

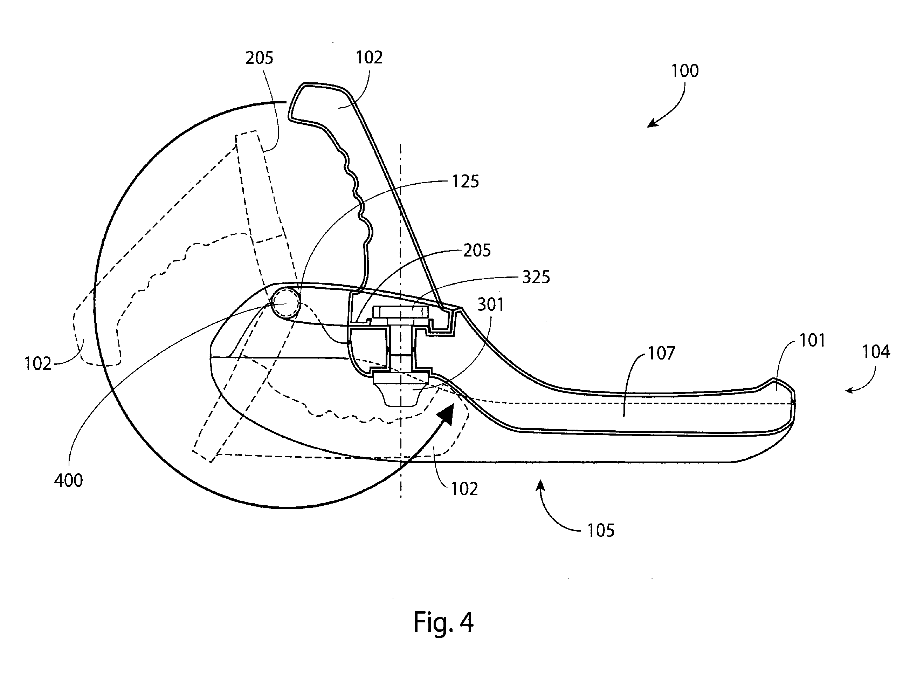

Fig. 4 substantially corresponds with Fig. 2 but now the shell parts are connected to each other forming the body 101, and the cams 330 of the handgrip 125 have been introduced in the recesses 204. In Fig. 3 the sledge 100 is shown in the second state for use, wherein however the turning knob 301 which serves for locking the handle 102 is shown in a first position in which it releases the handle 102. The handle 102 can be rotated around the axis of rotation 400 until the distal end of the handle 102 is in the recess 131 (see Fig. 1c). In that state the sledge 100 is in the compact first state (shown with broken lines) and can be carried easily by its handgrip 125. The handle 102 does not protrude in an awkward way, as is the case for a known sledge according to prior art.

The turning knob 301 is assembled, after connecting the shell parts 201, 202 to each other - in a state of the handle 102 which is not the compact first state nor the second state for use - with at the topside 106 the second part 312 that comprises the not-round head 325 and at the underside 105 the first part 311 that is provided with finger grip 320.

## Claims

1. A sledge for 1 person which sledge (100) comprises a body (101) with
- a front side (103) and a back side (104),
- a left longitudinal side (111) and a right longitudinal side (112);
- an underside (105) which acts as a sliding surface during use, and
- a topside (106) facing away from the underside (105) which topside (106) has a seat section (107) at the back side (104); and
the sledge (100) comprises a handle (102) to which the person can hold on during use of the sledge (100), which handle (102) during use is situated halfway both longitudinal sides and between the front side (103) and the seat section (107);
wherein the sledge (100) at the front side (103) has a left front section (121) and a right front section (122) with thereinbetween a mouth opening (123), the handle (102) has a proximal end and a distal end, and the sledge (100) can be in a compact first state and in a second state for use, wherein the handle (102) at the proximal end thereof is rotatable about an axis of rotation (400) between the left front section (121) and the right front section (122) and tranverse to the longitudinal direction of the sledge (100) for rotating the handle (102) from the compact first state toward the second state for use and vice versa, **characterized in that** the handle (102) at a distance of the distal end and outside the axis of rotation (400) is provided with a mounting section (205) which in the second state for use is connected with the body (101) by means of a connecting organ (301); and wherein the distal end of the handle (102) in the compact first state is received in a recess (131) that extends in the longitudinal direction of the sledge (100).

2. The sledge (100) according to claim 1, wherein the recess (131) extending in the longitudinal direction of the sledge (100) is situated at the underside (105) of the sledge (100) forming two sliding body parts (130).

3. The sledge (100) according to claim 2, wherein the sledge (100) comprises an upper shell part (201) and a lower shell part (202), wherein the sledge (100) on the interface between said shell parts in the front sections (121, 122) has recesses (204) for receiving cams (330) of the handle (102), and the shell parts (201, 202) have mounting sections (207) between the mouth opening (123) and the seat section (107) and the mounting section (205) of the handle (102) in the second state for use is supported against the mounting section (207) of the upper shell part (201).

4. The sledge (100) according to any of the preceding claims, wherein the handle (102) at the proximal end thereof has two legs (124) and between the left front section (121) and the right front section (122) a handgrip (125) is situated to which both legs (124) are connected.

5. The sledge (100) according to any of the preceding claims, wherein the handgrip (125) forms an axle which extends between the left front section (121) and the right front section (122).

6. The sledge (100) according to any of the preceding claims, wherein the connecting organ (301) has the shape of a locking organ that in a first position thereof releases the handle (102) for rotation around the axis of rotation (400) and in a second position thereof locks the handle (102) in the second state for use.

7. The sledge (100) according to claim 6, wherein the sledge (100) has a spring for keeping the locking organ in the second position.

## Patentansprüche

1. Schlitten für 1 Person, wobei der Schlitten (100) einen Rumpf (101) mit folgendem umfasst
- einer Vorderseite (103) und einer Rückseite (104),
- einer linken Längsseite (111) und einer rechten Längsseite (112);
- einer Unterseite (105), die als Gleitfläche während des Gebrauchs wirkt, und
- einer Oberseite (106), die von der Unterseite (105) weg zeigt,
wobei die Oberseite (106) einen Sitzabschnitt (107) an der Rückseite (104) aufweist; und
der Schlitten (100) einen Stiel (102) umfasst, an dem sich die Person während des Gebrauchs des Schlittens (100) festhalten kann, wobei der Stiel (102) während des Gebrauchs auf halbem Weg von beiden Längsseiten und zwischen der Vorderseite (103) und dem Sitzabschnitt (107) angeordnet ist;
wobei der Schlitten (100) an der Vorderseite (103) einen linken Vorderabschnitt (121) und einen rechten Vorderabschnitt (122) mit einer Eintrittsöffnung (123) dazwischen aufweist, der Stiel (102) ein proximales Ende und ein distales Ende aufweist, und der Schlitten (100) in einem kompakten ersten Zustand und einem zweiten Zustand zum Gebrauch vorliegen kann, wobei der Stiel (102) am proximalen Ende davon um eine Rotationsachse (400) zwischen dem linken Vorderabschnitt (121) und dem rechten Vorderabschnitt (122) und quer zur Längsrichtung des Schlittens (100) zur Drehung des Stiels (102) von dem kompakten Zustand in den zweiten Zustand zum Gebrauch und umgekehrt drehbar ist, **dadurch gekennzeichnet, dass** der Stiel (102) in einem Abstand vom distalen Ende und außerhalb der Rotationsachse (400) mit einem Befestigungsabschnitt (205) ausgestattet ist, der im zweiten Zustand zum Gebrauch mittels eines Verbindungselements (301) mit dem Rumpf (101) verbunden ist;
und wobei das distale Ende des Stiels (102) in dem kompakten ersten Zustand in einer Aussparung (131) aufgenommen ist, die sich in der Längsrichtung des Schlittens (100) erstreckt.

2. Schlitten (100) nach Anspruch 1, wobei die Aussparung (131), die sich in Längsrichtung des Schlittens (100) erstreckt, an der Unterseite (105) des Schlittens (100) unter Ausbildung von zwei gleitenden Rumpfteilen (130) angeordnet ist.

3. Schlitten (100) nach Anspruch 2, wobei der Schlitten (100) einen oberen Schalenteil (201) und einen unteren Schalenteil (202) umfasst, wobei der Schlitten (100) an der Grenzfläche zwischen den Schalenteilen in den vorderen Abschnitten (121, 122) Aussparungen (204) zur Aufnahme von Nocken (330) des Stiels (102) aufweist, und die Schalenteile (201, 202) Befestigungsabschnitte (207) zwischen der Eintrittsöffnung (123) und dem Sitzabschnitt (107) aufweist und der Befestigungsabschnitt (205) des Stiels (102) im zweiten Zustand zum Gebrauch auf dem Befestigungsabschnitt (207) des oberen Schalenteils (201) abgestützt ist.

4. Schlitten (100) nach einem der vorhergehenden Ansprüche, wobei der Stiel (102) am proximalen Ende davon zwei Schenkel (124) aufweist und zwischen dem linken Vorderabschnitt (121) und dem rechten Vorderabschnitt (122) ein Handgriff (125) angeordnet ist, mit dem beide Schenkel (124) verbunden sind.

5. Schlitten (100) nach einem der vorhergehenden Ansprüche, wobei der Handgriff (125) eine Achse ausbildet, die sich zwischen dem linken Vorderabschnitt (121) und dem rechten Vorderabschnitt (122) erstreckt.

6. Schlitten (100) nach einem der vorhergehenden Ansprüche, wobei das Verbindungselement (301) die Form eines Arretierelements aufweist, das in einer ersten Position davon den Stiel (102) zur Drehung um die Rotationsachse (400) löst und in einer zweiten Position davon den Stiel (102) im zweiten Zustand zum Gebrauch arretiert.

7. Schlitten (100) nach Anspruch 6, wobei der Schlitten (100) eine Feder zum Halten des Arretierelements in der zweiten Position aufweist.

## Revendications

1. Une luge pour une personne, laquelle luge (100) comprend un corps (101), ayant
- un côté avant (103) et un côté arrière (104),
- un côté longitudinal gauche (111) et un côté longitudinal droit (112) ;
- une face inférieure (105) qui agit comme surface de glissement lors de l'utilisation, et
- une face supérieure (106) s'étendant à distance de la face inférieure (105), laquelle face supérieure (106) a une portion formant siège (107) sur le côté arrière (104) ; et
la luge (100) comprend une poignée (102) à laquelle la personne peut se tenir pendant l'utilisation de la luge (100), laquelle poignée (102) pendant l'utilisation est située à mi-distance des côtés longitudinaux et entre le côté avant (103) et la portion formant siège (107) ;
la luge (100), au niveau du côté avant (103), a une portion avant gauche (121) et une portion avant droite (122), avec entre elles une ouverture (123) formant une bouche, la poignée (102) a une extrémité proximale et une extrémité distale, et la luge (100) peut être placé dans un premier état, de compacité, et dans un deuxième état, d'utilisation, la poignée (102), au niveau de son extrémité proximale, étant apte à tourner autour d'un axe de rotation (400) entre la portion avant gauche (121) et la portion avant droite (122), et transversalement à la direction longitudinale de la luge (100), pour faire tourner la poignée (102) du premier état, de compacité, vers le deuxième état, d'utilisation, et vice versa, **caractérisé en ce que** la poignée (102), à une distance de l'extrémité distale et en dehors de l'axe de rotation (400), est pourvue d'une portion de montage (205) qui, dans le deuxième état, d'utilisation, est reliée au corps (101) au moyen d'un organe de liaison (301) ; et l'extrémité distale de la poignée (102) dans le premier état, de compacité, est reçu dans un évidement (131) qui s'étend dans la direction longitudinale de la luge (100).

2. La luge (100) selon la revendication 1, dans laquelle l'évidement (131) s'étendant dans la direction longitudinale de la luge (100) est situé sur la face inférieure (105) de la luge (100), formant deux parties formant des corps de glissement (130).

3. La luge (100) selon la revendication 2, dans laquelle la luge (100) comprend une partie supérieure formant coque (201) et une partie inférieure formant coque (202), la luge (100), sur l'interface entre lesdites parties formant coque, dans les portions avant (121, 122), présente des évidements (204) pour recevoir des cames (330) de la poignée (102), et les parties formant coque (201, 202) ont des portions de montage (207) entre l'ouverture (123) formant une bouche et la portion formant siège (107), la portion de montage (205) de la poignée (102), dans le deuxième état, d'utilisation, prend appui contre la portion de montage (207) de la partie supérieure formant coque (201).

4. La luge (100) selon l'une quelconque des revendications précédentes, dans laquelle la poignée (102), à son extrémité proximale, possède deux branches (124), et, entre la portion avant gauche (121) et la portion avant droite (122), une poignée (125) est située, à laquelle les deux branches (124) sont connectées.

5. La luge (100) selon l'une quelconque des revendications précédentes, dans laquelle la poignée (125) forme un axe qui s'étend entre la portion avant gauche (121) et la portion avant droite (122).

6. La luge (100) selon l'une quelconque des revendications précédentes, dans laquelle l'organe de liaison (301) a la forme d'un organe de verrouillage qui, dans une première position de celui-ci, libère la poignée (102) pour une rotation autour de l'axe de rotation (400), et dans une deuxième position de celui-ci verrouille la poignée (102) dans le deuxième état, d'utilisation.

7. La luge (100) selon la revendication 6, dans laquelle la luge (100) comporte un ressort pour maintenir l'organe de verrouillage dans la deuxième position.
